# EUROPÄISCHE PATENTSCHRIFT

(11) **EP 0 674 036 B1**
(45) Veröffentlichungstag und Bekanntmachung des Hinweises auf die Patenterteilung: **08.08.2001**
(21) Anmeldenummer: 95103742.3
(22) Anmeldetag: 15.03.1995
(51) Int. Cl.: D04H 3/02, D04H 3/16

(54) **Verfahren zum Verstrecken von Filamentbündeln in Form eines Fadenvorhanges, dafür geeignete Vorrichtung sowie deren Verwendung zur Herstellung von Spinnvliesen**
Method of drawing filament bundles in the form of a curtain of yarns, apparatus suitable therefor and its use in the making of spun bonded nonwovens
Procédé pour l'étirage de filaments à faisceaux en forme d'un rideaux de fils, dispositif adapté à cette application et son utilisation pour la fabrication de non-tissés du type spunbonded

(30) Priorität: 23.03.1994 DE 4409940
(43) Veröffentlichungstag der Anmeldung: 27.09.1995
(73) Patentinhaber: Johns Manville International, Inc., Denver, Colorado 80202 (US)
(72) Erfinder: Profé, Hans Jürgen, D-86399 Bobingen (DE)
(74) Vertreter: Luderschmidt, Schüler & Partner GbR

(56) Entgegenhaltungen:
- DE-A- 4 014 414
- JP-A- 2 182 909
- US-A- 3 802 817
- US-A- 4 340 563
- US-A- 5 292 239
- DATABASE WPI Section Ch, Week 9335 Derwent Publications Ltd., London, GB; Class F01, AN 93-278734 XP002044909 & JP 05 195 308 A (TEJIN ENG KK) , 3.August 1993

## Beschreibung

Die vorliegende Erfindung betrifft ein Verfahren zum Verstrecken von Filamentbündeln, eine besonders dafür angepaßte Vorrichtung, sowie deren Einsatz bei der Herstellung von Spinnvliesen.

Das Verstrecken von Filamentbündeln mittels Verstreckdüsen ist an sich bekannt. So wird bei der Herstellung von Spinnvliesen geschmolzenes Polymeres durch Spinndüsen gesponnen, mittels Verstreckdüsen durch Luftreibung verstreckt und anschließend auf einem Transportband unter Bildung eines Vlieses abgelegt. Dieses wird in weiteren Schritten verfestigt und aus der Anlage abtransportiert. Beispiele für solche Verfahren sind in "Vliesstoffe" Herausgeber: J. Lünenschloß und W. Albrecht, G. Thieme Verlag 1982, S. 106-108, beschrieben.

Es ist auch bereits vorgeschlagen worden, Spinnvliese nach dem sogenannten Vorhangspinnverfahren herzustellen. Dabei werden die Spinndüsen in Reihen angeordnet, so daß die Filamente in Form eines Vorhanges ausgesponnen werden. In der Patentliteratur sind bereits mehrere Vorschläge für die Ausführung des Vorhangspinnverfahrens zu finden, so z.B. in der DE-AS-2,048,006, der DE-PS-3,117,737, der DE-A-3,701,531, der DE-A-3,713,861 und der DE-A-3,401,639.

Ferner ist aus der DE-A-1,785,158 eine Düse mit nachgeschaltetem Fadenkanal bekannt, die insbesondere bei der Herstellung nichtgewebter Produkte aus abgelegten Endlosfäden eingesetzt wird. Es werden Ausführungsformen dieser Düsen beschrieben, die sich beim Vorhangspinnen einsetzen lassen. Derartige Konstruktionen haben bislang jedoch in der Praxis keinen Eingang gefunden. Einer der Gründe dafür ist in der bislang unzureichenden Kontrolle der Gleichmäßigkeit der Verstreckbedingungen zu sehen.

Ferner ist bereits vorgeschlagen worden, Streckschachtwände von Verstreckdüsen verformbar auszugestalten, um damit unterschiedliche Verstreckbedingungen vorgeben zu können. In der DE-A-3,503,818 ist eine derartige Vorrichtung beschrieben, worin die Streckschachtwände aus einem verformbaren Werkstoff bestehen, der betriebsmäßig eine venturidüsenartige Verformung der Streckschachtwände zuläßt und die mittels Stelltrieben in vorgegebener Art und Weise verformt werden können. In der vorbekannten Düse erfolgt die gesamte Verstreckung innerhalb eines relativ begrenzten Bereiches in der Venturidüse.

Bei der Verstreckung von Fäden besteht der Wunsch, die Verstreckungsbedingungen für jeden Faden möglichst hoch und gleichmäßig zu gestalten. Mit der vorliegenden Erfindung werden ein Verfahren und eine Vorrichtung bereitgestellt, die eine hohe und besonders gleichmäßige Verstreckung von Fadenscharen gestatten.

Die vorliegende Erfindung betrifft ein Verfahren zum Verstrecken von in Form eines Fadenvorhanges vorliegenden Filamentbündeln (1) umfassend die Maßnahmen:
a) Einbringen der Filamentbündel (1) zusammen mit angesaugtem Gas in einen Injektor (2), der im Horizontalschnitt rechteckig ausgebildet ist, und Teilverstreckung der Filamentbündel (1) im Injektor (2),
b) Endverstreckung der Filamentbündel (1) in einem sich an den Injektor (2) anschließenden und aus zwei parallel und nahdistanziert angeordneten Platten (5) bestehenden Verstreckschacht (4),
c) Überwachung des Druckverlaufes im Verstreckschacht (4) durch mehrere in Form eines Rasters angeordnete Druckmesseinrichtungen (6), und
d) Einstellung eines gewünschten Druckverlaufes im Verstreckschacht (4) durch lokale Veränderung der Geometrie und/oder der Verstreckgasmenge im Verstreckschacht (4).

Im erfindungsgemäßen Verfahren erfolgt ein Teil der Verstreckung im Injektor (2) und die restliche Verstreckung erfolgt im Verstreckschacht (4). Bei der Verstreckung handelt es sich um eine pneumatische Verstreckung; diese erfolgt mittels der Gasreibung, die aus der Differenzgeschwindigkeit zwischen Verstreckgas, üblicherweise Luft, und Filament entsteht. Der Injektor (2) ist derart ausgestaltet, daß darin eine hohe Gasgeschwindigkeit hervorgerufen wird, wodurch eine Teilverstreckung der Fäden erfolgt.

In einer bevorzugten Ausführung der Erfindung weist der Injektor (2) im Vertikalschnitt eine parallelflächige Form auf.

In einer besonders bevorzugten Ausführung der Erfindung weist der Injektor (2) einen Diffusor auf, der den Injektor (2) mit dem Verstreckschacht (4) verbindet.

Die Dimensionierung des Injektors (2) und des Verstreckschachtes (4) und die Betriebsbedingungen, wie der Druck des Treibgases, ist im Einzelfall so zu wählen, daß in beiden Vorrichtungsteilen die geforderte Gesamtverstreckung erfolgt.

Um möglichst gleichmäßige Verstreckbedingungen für alle Filamente zu erreichen, ist es erforderlich, daß das Verstreckgas und die Filamente zur pneumatischen Verstreckung im Verstreckschacht (4) zwischen zwei exakt zueinander distanzierten Flächen durchgeleitet werden.

Typische Maße für die Platten (5) belaufen sich für die Breite auf 1 bis 10 m und auf die Höhe auf 1 bis 3 m. Der Abstand der Platten beläuft sich üblicherweise auf 5 bis 15 mm, vorzugsweise 8 bis 15 mm. Dieser Abstand sollte in allen Flächenbereichen so gehalten werden, daß eine gleichmäßige Verstreckung der einzelnen Filamente des Fadenvorhanges erreicht wird.

Eine gleichmäßige Verstreckung der einzelnen Filamente des Fadenvorhanges setzt eine möglichst gleichmäßige Geschwindigkeitsverteilung des Verstreckgases voraus.

Erfindungsgemäß wird vorgeschlagen, den Staudruck im Verstreckschacht (4) als Maß für die Geschwindigkeitsverteilung des Verstreckgases heranzuziehen, und diese durch lokale Veränderung der Geometrie und/oder der Verstreckgasmenge einzustellen. Im von den beiden Platten (5) gebildeten Strömungsspalt baut sich der Staudruck beim Durchtritt eines Gases in Richtung zur Austrittsseite linear bis zum Umgebungsdruck ab. Werden beispielsweise die Platten auf einen Nenn-Abstand von 10 mm montiert und wird dieser Spalt von Luft mit einer Geschwindigkeit von 120 m/sec durchströmt, so ergibt sich für eine Strömungslänge von 2,5 m ein Druckverlust von etwa 600 mbar.

Im Idealfall wird sich der Druck vom Eintritt in den Strömungsspalt bis zum Austritt daraus exakt linear auf Umgebungsdruck abbauen. In der Querrichtung gesehen müssen - bezogen auf gleiche Stromfadenlänge - die Drucke im Idealfall jeweils gleich groß sein.

Der Druckverlauf im Verstreckschacht (4) wird erfindungsgemäß durch mehrere in Form eines Rasters angeordnete Druckmesseinrichtungen (6) überwacht. Dadurch kann der Druckverlauf in und senkrecht zur Strömungsrichtung des Gases kontrolliert werden.

Üblicherweise erfolgt die Drucküberwachung mittels eines Rastersystems mit Längs- und Querkoordinaten. Damit ist die Erstellung eines Druckrasters möglich. Typische Abmessungen für ein Raster beinhalten eine Rasterteilung von 10 cm; d.h. 100 Meßstellen/m².

Wie bereits weiter oben aufgeführt, erfolgt die Einstellung des gewünschten Druckverlaufes, also die gewünschte Geschwindigkeitsverteilung des Verstreckgases im Verstreckschacht (4), durch lokale Veränderung der Geometrie und/oder der Verstreckgasmenge im Verstreckschacht (4).

Die lokale Veränderung Verstreckgasmenge im Verstreckschacht (4) kann durch gezielte lokale Zu- und Ableitung eines Regelgases erfolgen. Dieses wird vorzugsweise durch in Form eines Rasters auf mindestens einer der Platten (5) des Verstreckschachtes (4) angeordnete und einzeln betreibbare Regelgasleitungen erreicht, über die im Bedarfsfall Regelgas lokal in den Verstreckschacht (4) eingeleitet oder aus diesem abgeleitet wird. Die Zu- und Ableitung des Regelgases kann über jeweils ein und dieselbe Regelgasleitung erfolgen oder es sind separat angeordnete Regelgaszuleitungen und Regelgasableitungen vorgesehen.

In einer besonders bevorzugten Ausführungsform der Erfindung erfolgt die Einstellung des gewünschten Druckverlaufes im Verstreckschacht (4) durch lokales Verformen mindestens einer der Platten (5) mittels Stellvorrichtungen (7), die in Form eines Rasters angeordnet und einzeln verstellbar sind.

Die Einstellung des gewünschten Druckverlaufes im Verstreckschacht (4) läßt sich auch durch eine Kombination der oben beschriebenen Maßnahmen durchführen.

Weicht der im Einzelfall an einer bestimmten Stelle ermittelte Staudruck vom Sollwert ab, so läßt sich dieser durch örtliches Verformen mindestens einer der Platten (5) mittels Stellvorrichtungen (7), die an dieser Stelle oder in deren Nähe angebracht sind, wieder einregeln. Dem Raster von Druckmesseinrichtungen (6) entspricht also ein zugeordnetes Raster von Stellvorrichtungen (7). Durch die örtliche Verformung wird der Abstand zwischen den Platten (5) an dieser Stelle geändert und damit die Strömungsgeschwindigkeit im Strömungsspalt, was wiederum die Größe des Staudruckes an dieser Stelle beeinflußt. Entsprechendes gilt sinngemäß für die Regelung mittels Zu- und Ableitung von Regelgas.

Werden in Bezug auf den Sollwert zu hohe (niedrige) Staudrucke festgestellt, so ist die Strömungsgeschwindigkeit des Gases zu niedrig (hoch) und demzufolge der Strömungsspalt zu weit (schmal) bzw. der Verstreckgasdurchsatz an dieser Stelle zu niedrig (hoch).

Bei den Druckmesseinrichtungen (6) kann es sich um Drucksensoren handeln. Als Drucksensoren können jede für diesen Zweck geeignete Vorrichtungen herangezogen werden, solange der Transport der Filamente im Verstreckschacht (4) dadurch nicht behindert wird.

Die Meßköpfe der Drucksensoren können direkt in den Verstreckschacht (4) einmünden.

In einer besonders bevorzugten Ausführungsform wird der statische Druck an der betreffenden Stelle des Verstreckschachtes (4) gemessen. Zu diesem Zweck enthält der Verstreckschacht (4) an den betreffenden Stellen Bohrungen (13), vorzugsweise im Durchmesserbereich von 0,5 bis 1,2 mm, welche jeweils in einen abgeschlossenen Raum (12) münden, in dem sich ein statischer Druck aufbaut, der dem Druck an der betreffenden Stelle des Verstreckschachtes entspricht. Die Druckmessung erfolgt in diesem Meßraum, beispielsweise durch einen Drucksensor, dessen Meßkopf in der Wand des Meßraumes angebracht ist oder vorzugsweise mit diesem über eine Schlauchleitung (17) verbunden ist.

In einer bevorzugten Ausführungsform des erfindungsgemäßen Verfahrens werden die Druckmeßwerte mehrerer Druckmesseinrichtungen (6) sequentiell abgefragt.

Dies erfolgt üblicherweise durch einen Wahlschalter, mittels dessen die einzelnen Druckmeßeinrichtungen (6) der Reihe nach abgefragt werden.

Bei dem Wahlschalter kann es sich um jede für diesen Zweck geeignete Einrichtung handeln, beispielsweise um eine elektronische Schaltung, die einzelnen Druckmeßeinrichtungen (6) der Reihe nach abfragt, wobei diese Abfrage automatisiert sein kann oder auch durch Handbetrieb erfolgen kann; es kann sich aber auch um eine mechanische Schaltung handeln, beispielsweise um einen Stufenschalter.

Vorzugsweise handelt es sich bei dem Wahlschalter um einen pneumatischen Stufenschalter. Ein Beispiel dafür ist ein pneumatischer Stufenschalter der Firma Samsomatic. Dieser ist mit mehreren Druckmeßeinrichtungen (6) über Schlauchleitungen (17) mit einem Drucksensor verbunden.

In einer besonders bevorzugten Ausführungsform des erfindungsgemäßen Verfahrens werden die Druckmeßwerte verschiedener Druckmeßeinrichtungen (6) nacheinander einem Meßwertumformer zugeführt und gegebenenfalls angezeigt und der umgeformte Druckmeßwert wird zur Regelung des Druckes an der oder in der Nähe der betreffenden Druckmeßeinrichtungen (6) verwendet. Zu diesem Zweck wird der gemessene Druckwert an der betreffenden Stelle mit einem vorbestimmten Sollwert verglichen und bei Über- oder Unterschreiten eines vorgegebenen Bereiches durch Veränderung des Abstandes zwischen den Platten (5) mittels einer oder mehrerer an oder in der Nähe der betreffenden Druckmesseinrichtung (6) befindlichen Stellvorrichtung(en) (7) so eingeregelt, daß der Druckmesswert in besagten Bereich zurückgeführt wird und/oder durch Veränderung der durch den Verstreckschacht (4) strömenden Verstreckgasmenge mittels Zu- oder Ableitung eines Teils des Verstreckgases durch eine oder mehrere an oder in der Nähe der betreffenden Druckmesseinrichtung (6) befindliche Regelgasleitung(en) so eingeregelt, daß der Druckmesswert in besagten Bereich zurückgeführt wird

Die Einstellung eines gewünschten Druckverlaufes im Verstreckschacht (4) erfolgt vorzugsweise durch örtliches Ein- oder Ausbeulen eines beulbaren Bleches, aus dem eine der Platten (5) besteht. Die Platten (5) können auch aus anderen verformbaren Materialien bestehen, beispielsweise aus Kunststoff.

Besonders bevorzugt ist eine der Platten (5a) planflächengenau ausgestaltet. Dies kann durch Auswahl eines geeigneten Materials, einer geeigneten Wandstärke und vorzugsweise aus Blech mit einem flächenstabilisierenden Gitterrahmen erfolgen. Die andere Platte (5b) ist in rasterartigen Flächenabschnitten beulfähig.

In einer bevorzugten Ausführungsform befinden sich die Raster der Druckmesseinrichtungen (6) und der Stellvorrichtungen (7) in der beulfähigen Platte (5b), wobei beide Raster in Form eines Rechteckes, Quadrates, Dreiecks oder einer Raute angeordnet sind. In zweckmäßiger Weise wechseln jeweils eine Druckmesseinrichtung (6) und eine Stellvorrichtung (7) und/oder Regelgasleitung ab. Dies gilt für die Längs- und die Querrichtung der Platte.

In einer besonders bevorzugten Ausführungsform befinden sich die Raster der Druckmesseinrichtungen (6) und der Stellvorrichtungen (7) in den Platten (5a) und (5b), wobei jeweils eine Druckmesseinrichtung einer Stellvorrichtung gegenüberliegt.

Bei der Stellvorrichtung kann es sich um jede beliebige Vorrichtung handeln, die geeignet ist, den Abstand zwischen den Platten in vorgegebener Weise zu verändern. Es kann sich um automatisch arbeitende oder um manuell betreibbare Vorrichtungen handeln. Beispiele für derartige Vorrichtungen sind hydraulisch, pneumatisch, elektromechanisch oder magnetisch betriebene Stellvorrichtungen.

In einer bevorzugten Ausführungsform handelt es sich bei den Stellvorrichtungen (7) um Stellschrauben, mit denen die Platte an der gewünschten Stelle positiv oder negativ gebeult werden kann.

Mit dem beschriebenen Verfahren lassen sich insbesondere Spinnvliese herstellen; ganz besonders bevorzugt Spinnvliese aus synthetischen Polymeren, wie Polyestern, insbesondere Polyethylenterephthalat.

Die Erfindung betrifft auch ein Verfahren zur Herstellung von Spinnvliesen, das folgende Maßnahmen umfaßt:
i) Pressen eines verspinnbaren Materials aus in Reihen angeordneten Spinndüsen zu einer in Form eines Fadenvorhanges vorliegenden Schar von Filamenten (1),
ii) Verfestigen dieser Schar in einer unterhalb der Spinndüsen angeordneten Abkühlzone, wobei gegebenenfalls eine Anblasung der Filamente erfolgt,
iii) Verstrecken dieser Schar unterhalb der Abkühlzone nach dem oben definierten Verfahren, wobei der Druckverlauf im Verstreckschacht (4) so eingestellt wird, daß der Abfall des Staudruckes im Verstreckschacht (4) in Fadenlaufrichtung gesehen einen linearen Verlauf und senkrecht zur Fadenlaufrichtung einen konstanten Wert annimmt, und
iv) Ablage der verstreckten Filamente unter Ausbildung eines primären textilen Flächengebildes auf einer Transportvorrichtung (19).

Ferner betrifft die Erfindung eine Vorrichtung zum pneumatischen Verstrecken von in Form eines Fadenvorhanges vorliegenden Filamentenbündeln (1) umfassend einen im Horizontalschnitt rechteckig ausgebildeten Injektor (2), an dem sich ein Verstreckschacht (4) in Form zweier parallel angeordneter Platten (5) anschließt, wobei zumindest eine der Platten (5) mehrere in Form eines Rasters angeordnete Druckmesseinrichtungen (6) aufweist und zwecks Einstellung des Staudrucks im Verstreckschacht als Maß für die Geschwindigkeitsverteilung des Verstreckgases Vorrichtungen aufweist, mit denen die Geschwindigkeitsverteilung des Verstreckgases im Verstreckschacht (4) eingestellt werden kann, und zwar durch örtliche Verformung zumindest einer Platte und/oder örtliche Veränderung der Verstreckgasmenge im Verstreckschacht (4).

In einer bevorzugten Ausführungsform weist mindestens eine der Platten (5) des Verstreckschachtes (4) mehrere in Form eines Rasters angeordnete Regelgasleitungen auf.

In einer besonders bevorzugten Ausführungsform weist mindestens eine der Platten (5) des Verstreckschachtes (4) mehrere in Form eines Rasters angeordnete Stellvorrichtungen (7) auf mittels derer die Platte (5) örtlich verformbar ist.

In einer weiteren besonders bevorzugten Ausführungsform betrifft die Erfindung eine derartige Vorrichtung, die einen Einzugseinsatz (8) aufweist, welcher einen Einzugsspalt (9) besitzt, der die Filamentbündel (1) aufnimmt, und welche in eine Gas-Mischkammer (10) mündet, die mit zumindest einer Gaszuführleitung (11) ausgestattet ist.

Die Gas-Mischkammer (10) wird durch eine oder mehrere Gaszuführleitungen (11) mit Treibgas versorgt. Die Gasversorgung der Gas-Mischkammer (10) kann durch beliebige der Gaszuführleitung (11) nachgeschaltete Düsen erfolgen, vorzugsweise über Lavaldüsen.

In den folgenden Abbildungen ist die Erfindung näher dargestellt.

Abbildung 1 zeigt eine Vorrichtung zur Herstellung eines Spinnvlieses nach dem Vorhangspinnverfahren.

Abbildung 2 beschreibt die räumliche Druckverteilung im Verstreckschacht (4).

Abbildung 3 stellt eine bevorzugte Anordnung der Raster der Druckmesseinrichtungen (6) und der Stellvorrichtungen (7) dar.

Abbildung 4 stellt einen Ausschnitt aus einem Verstreckschacht (4) dar.

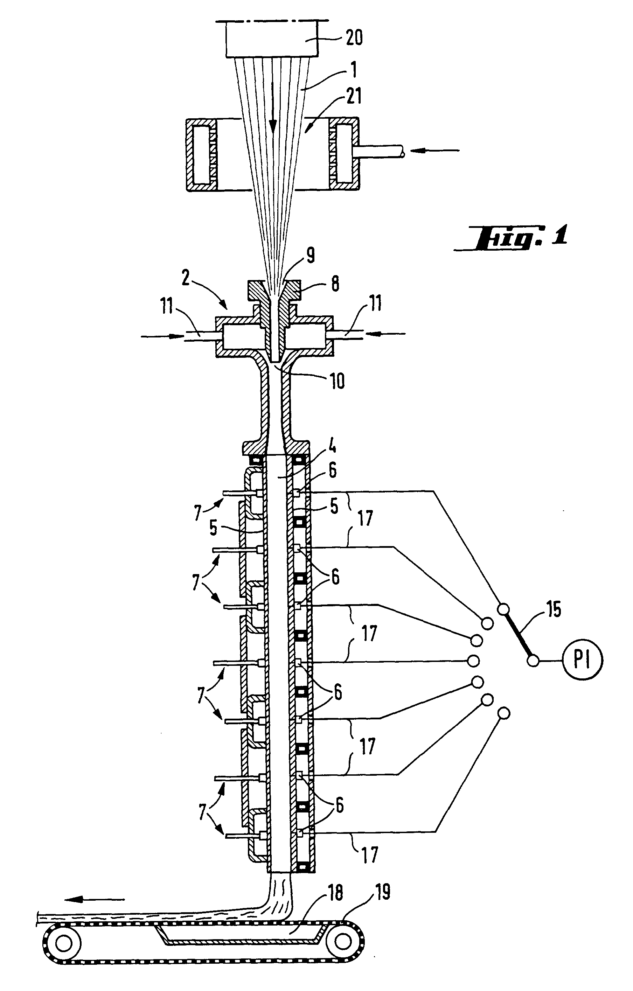

In der Vorrichtung nach Abbildung 1 ist eine Vorrichtung zur Herstellung eines Spinnvlieses im Längsschnitt dargestellt. Verspinnbares Material wird durch Spinndüsen (20) gepreßt. In der dargestellten Vorrichtung sind die Spinndüsen (20) in Reihen angeordnet. Es entsteht also eine in Form eines Fadenvorhanges vorliegende Schar von Filamenten (1). Diese Schar wird in einer unterhalb der Spinndüsen angeordneten Abkühlzone (21) verfestigt. In der dargestellten Ausführungsform erfolgt das Abkühlen durch Queranblasung mit Luft. Unterhalb der Abkühlzone (21) wird der Fadenvorhang einer Verstreckung unterworfen. Dazu treten die Filamentbündel (1) in den Einzugsspalt (9) eines Injektors (2) ein, der über zwei Gaszuführleitungen (11) mit Treibgas versorgt wird. Das Treibgas tritt über beidseitige Treibluftschlitze, vorzugsweise Lavaldüsen, in eine Gas-Mischkammer (10) ein.

An den Injektor (2) schließt sich ein Verstreckschacht (4) in Form zweier parallel angeordneter Platten (5) an. Die Länge dieses Verstreckschachtes (4) ist mitbestimmend für die Verstreckung der einzelnen Fäden und beträgt beispielsweise 2,5 m. Eine der Platten (5) weist mehrere in Form eines Rasters angeordnete Druckmesseinrichtungen (6) und die andere Platte (5) mehrere in Form eines Rasters angeordnete Stellvorrichtungen (7) auf. Mit diesen Stellvorrichtungen (7) kann die Platte (5) örtlich verformt werden, wobei der Druckverlauf im Verstreckschacht (4) so eingestellt wird, daß der Abfall des Staudruckes im Verstreckschacht (4) in Fadenlaufrichtung gesehen einen linearen Verlauf und senkrecht zur Fadenlaufrichtung und in Richtung des Fadenvorhanges gesehen einen konstanten Wert annimmt. In der dargestellten Ausführungsform weist die Verstreckvorrichtung einen Einzugeinsatz (8) auf, der die Filamentbündel (1) aufnimmt, und welcher über eine Gas-Mischkammer (10) in einen Verstreckschacht (4) mündet. Die Gas-Mischkammer (10) ist mit zwei Gaszuführleitungen (11) ausgestattet.

Der Injektor (2) wird typischerweise mit Druckluft von 2,5 bar betrieben. Dieses Druckgefälle wird soweit in Gasgeschwindigkeit umgewandelt, daß im anschließenden Verstreckschacht beispielsweise noch Restdruckgefälle von etwa 0,5 bar zur Verfügung steht, um die Wandreibung im Verstreckschacht zu überwinden.

Die Druckwerte der einzelnen Druckmesseinrichtungen (6) werden in der dargestellten Ausführungsform mittels eines Wahlschalters (15) sequentiell abgefragt.

Nach dem Passieren der Verstreckvorrichtung werden die verstreckten Filamente unter Ausbildung eines primären textilen Flächengebildes auf einer Transportvorrichtung (19) abgelegt. Dabei handelt es sich üblicherweise um ein Siebband, an dessen Unterseite eine Absaugvorrichtung (18) angebracht ist, um das durch die Filamente mitgerissene Gas abzusaugen und das primäre Spinnvlies auf dem Siebband zu fixieren.

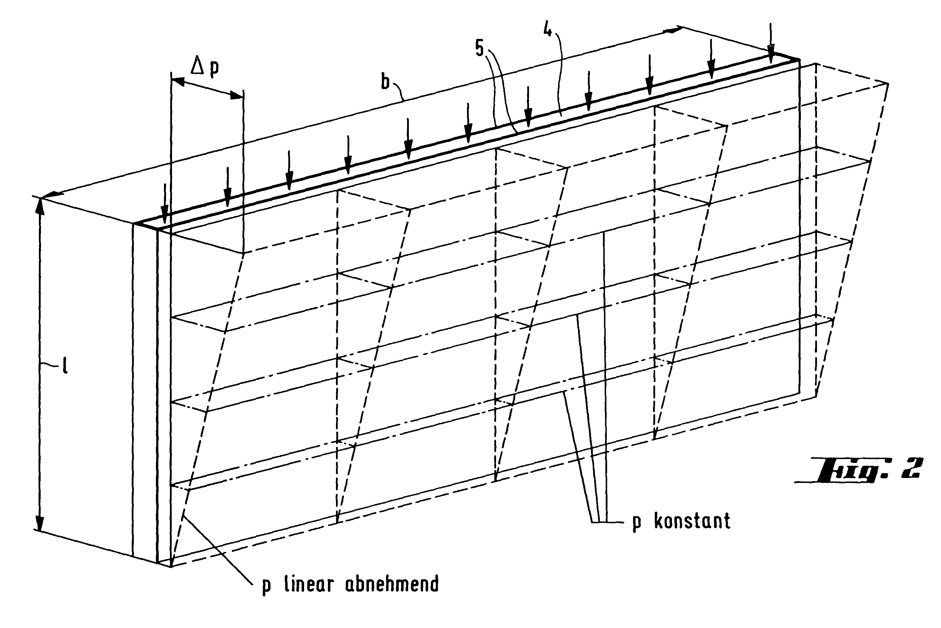

In der Darstellung nach Abbildung 2 tritt Luft über die gesamte Schachtbreite in Verstreckschacht (4) ein. Infolge der Luftreibung an der Verstreckschachtwand baut sich im Streckschacht ein Staudruck auf, der sich bei Austritt der Luft aus dem Schacht auf Umgebungsdruck abgebaut hat. Der gewünschte Druckabfall entlang der Strömungslänge soll linear verlaufen. In Querrichtung gesehen werden konstante Druckwerte angestrebt.

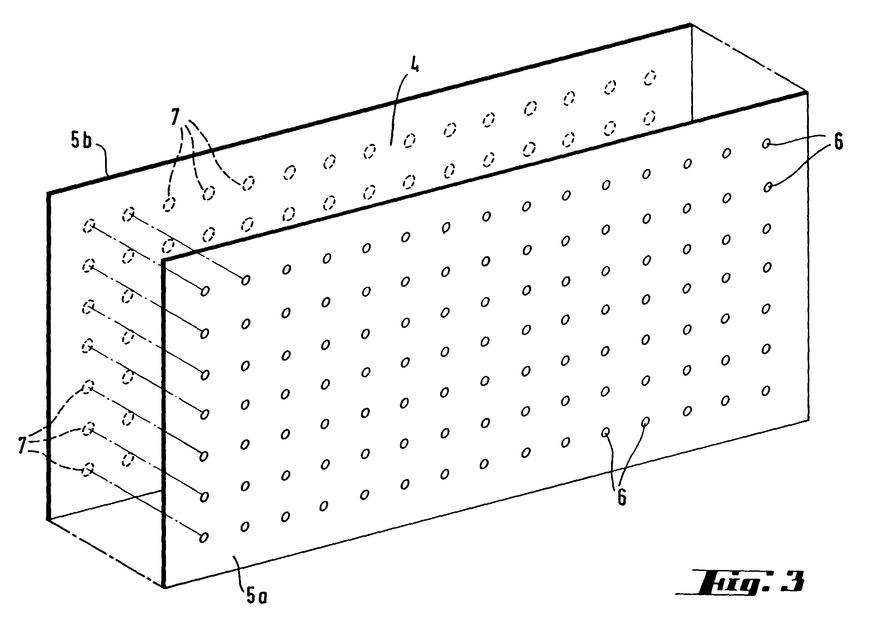

In Abbildung 3 ist eine bevorzugte Anordnung von einander gegenüberliegenden Druckmesseinrichtungen (6) und Stellvorrichtungen (7) in den Platten (5) dargestellt.

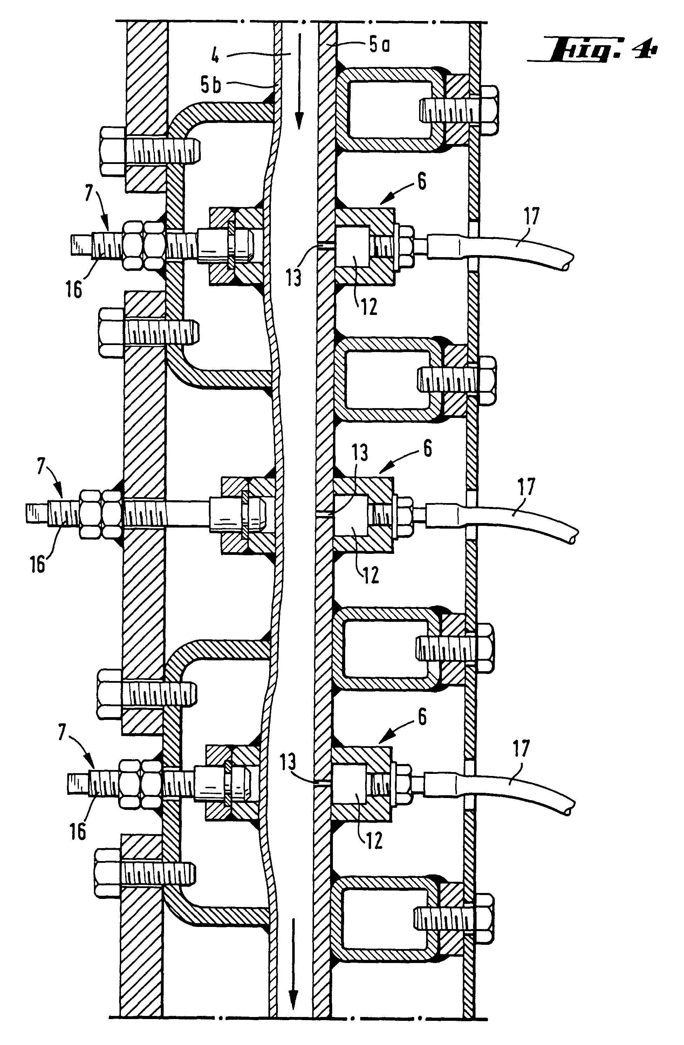

In Abbildung 4 ist eine bevorzugte Ausführungsform eines Verstreckschachtes (4) dargestellt. Eine der Platten (5a) ist flächenstabil ausgestaltet. Dies geschieht zweckmäßigerweise durch Leichtbauweise wie sie im Flugzeugbau üblich ist. Die andere Platte (5b) besteht aus beulfähigem Blech.

In der Platte (5a) befinden sich die Raster der Druckmesseinrichtungen (6), während sich in der Platte (5b) die Raster der Stellvorrichtungen (7) befinden. In der dargestellten Ausführungsform sind im Verstreckschacht (4) Bohrungen (13) angebracht, welche jeweils in abgeschlossene Meßräume (12) münden, in denen die Druckmessung mittels einer nicht dargestellten Druckmeßeinrichtung erfolgt, die über eine Schlauchleitung (17) mit dem abgeschlossenen Meßraum (12) in Verbindung steht.

Die Beulung der Platte (5b) erfolgt mittels Schrauben (16), die auf das Blech einwirken. Je nach Drehrichtung wird eine positive oder negative Beulung erzeugt.

## Patentansprüche

1. Verfahren zum Verstrecken von in Form eines Fadenvorhanges vorliegenden Filamentbündeln (1) umfassend die Maßnahmen:
a) Einbringen der Filamentbündel (1) zusammen mit angesaugtem Gas in einen Injektor (2), der im Horizontalschnitt rechteckig ausgebildet ist, und Teilverstreckung der Filamentbündel (1) im Injektor (2),
b) Endverstreckung der Filamentbündel (1) in einem sich an den Injektor (2) anschließenden und aus zwei parallel und nahdistanziert angeordneten Platten (5) bestehenden Verstreckschacht (4),
c) Überwachung des Druckverlaufes im Verstreckschacht (4) durch mehrere in Form eines Rasters angeordnete Druckmesseinrichtungen (6), und
d) Einstellung eines gewünschten Druckverlaufes im Verstreckschacht (4) durch lokale Veränderung der Geometrie und/oder der Verstreckgasmenge im Verstreckschacht (4).

2. Verfahren nach Anspruch 1, dadurch gekennzeichnet, daß der Injektor (2) im Vertikalschnitt eine parallelflächige Form aufweist.

3. Verfahren nach Anspruch 1, dadurch gekennzeichnet, daß der Injektor (2) einen Diffusor aufweist, der den Injektor (2) mit dem Verstreckschacht (4) verbindet.

4. Verfahren nach Anspruch 1, dadurch gekennzeichnet, daß die Einstellung eines gewünschten Druckverlaufes im Verstreckschacht (4) durch gezielte lokale Zu- und Ableitung eines Regelgases erfolgt, wobei dieses Regelgas durch in Form eines Rasters auf mindestens einer der Platten (5) des Verstreckschachtes (4) angeordnete und einzeln betreibbare Regelgasleitungen in den Verstreckschacht (4) eingeleitet oder aus diesem abgeleitet wird.

5. Verfahren nach Anspruch 1, dadurch gekennzeichnet, daß die Einstellung eines gewünschten Druckverlaufes im Verstreckschacht (4) durch lokales Verformen mindestens einer der Platten (5) mittels Stellvorrichtungen (7) erfolgt, die in Form eines Rasters angeordnet und einzeln verstellbar sind.

6. Verfahren nach Anspruch 1, dadurch gekennzeichnet, daß das Filamentbündel (1) zusammen mit angesaugtem Gas in einen Einzugseinsatz (8) eingebracht wird, welcher einen Einzugsspalt (9) besitzt, der das Filamentbündel (1) aufnimmt, und welcher in eine Gas-Mischkammer (10) mündet, die über mindest eine Gaszuführleitung (11) mit Treibgas versorgt wird.

7. Verfahren nach Anspruch 6, dadurch gekennzeichnet, daß das Treibgas der Gas-Mischkammer (10) über eine Lavaldüse zugeführt wird.

8. Verfahren nach Anspruch 1, dadurch gekennzeichnet, daß der durch den Staudruck im Verstreckschacht (4) bewirkte statische Druck in einem abgeschlossenen Meßraum (12) gemessen wird, der über eine Bohrung (13) mit dem Verstreckschacht (4) in Verbindung steht.

9. Verfahren nach Anspruch 8, dadurch gekennzeichnet, daß die Druckmessung mittels eines Drucksensors erfolgt, der mit dem abgeschlossenen Meßraum (12) über eine Schlauchleitung (14) verbunden ist.

10. Verfahren nach Anspruch 1, dadurch gekennzeichnet, daß die Druckmeßwerte mehrerer Druckmesseinrichtungen (6) sequentiell abgefragt werden.

11. Verfahren nach Anspruch 9, dadurch gekennzeichnet, daß die mehrere Schlauchleitungen (17) mit einem pneumatischen Stufenschalter (15) verbunden sind und daß die Abfrage der Druckmesswerte mehrerer Druckmesseinrichtungen (6) sequentiell durch den pneumatischen Stufenschalter (15) erfolgt.

12. Verfahren nach Anspruch 1, dadurch gekennzeichnet, daß der gemessene Druckmesswert der einzelnen Druckmesseinrichtungen (6) mit einem vorbestimmten Sollwert verglichen wird und bei Über- oder Unterschreiten eines vorgegebenen Bereiches durch Veränderung des örtlichen Abstandes zwischen den Platten (5) mit einer oder mehrerer in der Nähe der betreffenden Druckmesseinrichtung (6) befindlichen Stellvorrichtung(en) (7) so eingeregelt wird, daß der Druckmesswert in besagten Bereich zurückgeführt wird.

13. Verfahren nach Anspruch 1, dadurch gekennzeichnet, daß der gemessene Druckmesswert der einzelnen Druckmesseinrichtungen (6) mit einem vorbestimmten Sollwert verglichen wird und bei Über- oder Unterschreiten eines vorgegebenen Bereiches durch Veränderung der durch den Verstreckschacht (4) strömenden Verstreckgasmenge mittels Zu- oder Ableitung eines Teils des Verstreckgases durch eine oder mehrere an oder in der Nähe der betreffenden Druckmesseinrichtung (6) befindliche Regelgasleitung(en) so eingeregelt wird, daß der Druckmesswert in besagten Bereich zurückgeführt wird.

14. Verfahren nach Anspruch 1, dadurch gekennzeichnet, daß die Einstellung eines gewünschten Druckverlaufes im Verstreckschacht (4) durch örtliches Ein- oder Ausbeulen eines beulbaren Bleches erfolgt, aus dem eine der Platten (5) besteht.

15. Verfahren zur Herstellung von Spinnvliesen nach Anspruch 1, dadurch gekennzeichnet, daß
i) ein verspinnbares Material aus in Reihen angeordneten Spinndüsen zu einer in Form eines Fadenvorhanges vorliegenden Schar von Filamenten (1) gepreßt wird,
ii) diese Schar in einer unterhalb der Spinndüsen angeordneten Abkühlzone verfestigt wird, wobei gegebenenfalls eine Anblasung der Filamente erfolgt,
iii) diese Schar unterhalb der Abkühlzone einer Verstreckung gemäß Anspruch 1 unterworfen wird, wobei der Druckverlauf im Verstreckschacht (4) so eingestellt wird, daß der Abfall des Staudruckes im Verstreckschacht (4) in Fadenlaufrichtung gesehen einen linearen Verlauf und senkrecht zur Fadenlaufrichtung einen konstanten Wert annimmt, und
iv) die verstreckten Filamente unter Ausbildung eines primären textilen Flächengebildes auf einer Transportvorrichtung (19) abgelegt werden.

16. Vorrichtung zum pneumatischen Verstrecken von in Form eines Fadenvorhanges vorliegenden Filamentbündeln (1) umfassend einen im Horizontalschnitt rechteckig ausgebildeten Injektor (2), an dem sich ein Verstreckschacht (4) in Form zweier parallel angeordneter Platten (5) anschließt, wobei zumindest eine der Platten (5) mehrere in Form eines Rasters angeordnete Druckmesseinrichtungen (6) aufweist und zwecks Einstellung des Staudrucks im Verstreckschacht als Maß für die Geschwindigkeitsverteilung des Verstreckgases Vorrichtungen aufweist, mit denen die Geschwindigkeitsverteilung des Verstreckgases im Verstreckschacht (4) eingestellt werden kann, und zwar durch örtliche Verformung zumindest einer Platte und/oder örtliche Veränderung der Verstreckgasmenge im Verstreckschacht (4).

17. Vorrichtung nach Anspruch 16, dadurch gekennzeichnet, daß mindestens eine der Platten (5) des Verstreckschachtes (4) mehrere in Form eines Rasters angeordnete Regelgasleitungen aufweist.

18. Vorrichtung nach Anspruch 16, dadurch gekennzeichnet, daß mindestens eine der Platten (5) des Verstreckschachtes (4) mehrere in Form eines Rasters angeordnete Stellvorrichtungen (7) aufweist mittels derer die Platte (5) örtlich verformbar ist.

19. Vorrichtung nach Anspruch 16, dadurch gekennzeichnet, daß der Injektor (2) im Vertikalschnitt eine parallelflächige Form aufweist.

20. Vorrichtung nach Anspruch 16, dadurch gekennzeichnet, daß der Injektor (2) einen Diffusor aufweist, der den Injektor (2) mit dem Verstreckschacht (4) verbindet.

21. Vorrichtung nach Anspruch 16, dadurch gekennzeichnet, daß diese einen Einzugseinsatz (8) aufweist, welcher einen Einzugsspalt (9) besitzt, der die Filamentbündel (1) aufnimmt, und welcher in eine Gas-Mischkammer (10) mündet, die mit zumindest einer Gaszuführleitung (11) ausgestattet ist.

22. Vorrichtung nach Anspruch 21, dadurch gekennzeichnet, daß die Gasversorgung der Gas-Mischkammer (10) durch eine der Gaszuführleitung (11) nachgeschaltete Lavaldüse erfolgt.

23. Vorrichtung nach Anspruch 16, dadurch gekennzeichnet, daß im Verstreckschacht (4) Bohrungen (13) angebracht sind, welche jeweils in abgeschlossene Meßräume (12) münden, in denen die Druckmessung mittels Druckmeßeinrichtungen erfolgt.

24. Vorrichtung nach Anspruch 23, dadurch gekennzeichnet, daß ein Wahlschalter, vorzugsweise ein pneumatischer Stufenschalter (15) vorgesehen ist, mit dem die Druckwerte mehrerer abgeschlossener Meßräume (13) sequentiell abgefragt werden.

25. Vorrichtung nach Anspruch 16, dadurch gekennzeichnet, daß sich die Raster der Druckmesseinrichtungen (6) in einer der den Verstreckschacht (4) bildenden Platten (5a) und sich die Raster der Stellvorrichtungen (7) in der anderen der den Verstreckschacht (4) bildenden Platten (5b) befinden, wobei jeweils eine Druckmesseinrichtung einer Stellvorrichtung gegenüberliegt.

26. Vorrichtung nach Anspruch 16, dadurch gekennzeichnet, daß eine Regeleinrichtung (18) vorgesehen ist, welche von einem Meßwertumformer (19) angesteuert wird, der die Messwerte der einzelnen Druckmesseinrichtungen (6) anzeigt, und die gemessenen Druckmesswerte der einzelnen Druckmesseinrichtungen (6) mit einem vorbestimmten Sollwert vergleicht und bei Über- oder Unterschreiten eines vorgegebenen Bereiches eine sich in der Nähe der betreffenden Druckmesseinrichtung (6) befindliche Stellvorrichtung (7) so einregelt und/oder über eine sich in der Nähe der betreffenden Druckmesseinrichtung (6) befindliche Regelgasleitung Regelgas in den Verstreckschacht (4) ein- oder ableitet, daß der Druckmesswert in besagten Bereich zurückgeführt wird.

27. Verwendung der Vorrichtung nach Anspruch 16 beim Verstrecken bei der Herstellung von Spinnvliesen.

## Claims

1. A method of drawing filament bundles (1) assembled in the form of a curtain of yarns, said method comprising the steps:
a) introducing said filament bundles (1) together with sucked gass into an injector (2) which is developped so as to be rectangular in horizontal cross-section, and partial orientation of said filament bundles (1) in the injector (2),
b) final drawing of said filament bundles (1) in a drawing shaft (4) adjacent to said injector (2) and being comprised of two plates (5) disposed in parallel and with close proximity,
c) monitoring the pressure gradient in said drawing shaft (4) by several pressure gauge equipments (6) disposed in the form of a grid, and
d) adjusting a desired pressure gradient in said drawing shaft (4) by locally changing the geometric dimensions and/or the amount of the drawing gas in said drawing shaft (4).

2. The method of claim 1, characterized in that said injector (2) shows a plane-parallel form when taken in vertical cross-section.

3. The method of claim 1, characterized in that said injector (2) comprises a diffusor connecting said injector (2) with said drawing shaft (4).

4. The method of claim 1, characterized in that the adjustment of a desired pressure gradient in said drawing shaft (4) is executed by a purposeful feeding and venting of a control gas wherein said control gas is introduced into said drawing shaft (4) or withdrawn therefrom through individually operable contol gas conduits arranged in the form of a grid on at least one of the plates (5) of said drawing shaft (4).

5. The method of claim 1, characterized in that the adjustment of a desired pressure gradient in the drawing shaft (4) is executed by a local alteration of the form of at least one of the plates (5) by means of individually adjustable positioning devices (7) arranged in the form of a grid.

6. The method of claim 1, characterized in that, together with sucked gas, the filament bundle (1) is introduced into a drafting inset (8) comprising a drafting slot (9) that receives said filament bundle (1) and runs into a gas mixer chamber (10) which is fed with a propellent via at least one gas feeding tube (11).

7. The method of claim 6, characterized in that the propellent is fed into the gas mixer chamber (10) via a Laval nozzle.

8. The method of claim 1, characterized in that the static pressure effected by the impact pressure in the drawing shaft (4) is measured in a closed measuring room (12) which is connected with the drawing shaft (4) via a boring.

9. The method of claim 8, characterized in that the measuring of the pressure is performed by means of a pressure sensor which is connected with the closed measuring room (12) via a hose pipe (14).

10. The method of claim 1, characterized in that the measured pressure values of several pressure gauge equipments (6) are interrogated sequentially.

11. The method of claim 9, characterized in that the several hose pipes (17) are connected with a pneumatic multiple contact switch (15) and in that the interrogation of the pressure gauge values of several pressure gauge equipments (6) is executed sequentially by means of said pneumatic multiple contact switch (15).

12. The method of claim 1, characterized in that the measured pressure gauge value of the individual pressure gauge equipments (6) is compared with a predetermined set-point and, when it has surpassed or fallen below a predetermined range, it is adjusted by changing the local distance between the plates (5) by means of one or several regulating device(s) (7) situated near the corresponding pressure gauge equipment (6) so as to restore the pressure gauge value to said range.

13. The method of claim 1, characterized in that the measured pressure gauge value of the individual pressure gauge equipments (6) is compared with a predetermined set-point and, when it has surpassed or fallen below a predetermined range, it is adjusted by changing the amount of drawing gass running through the drawing shaft (4) by feeding or deflating a portion of said drawing gas by means of one or several control gas conduit(s) disposed at or near the corresponding pressure gauge equipment (6) so as to restore the pressure gauge value in said range.

14. The method of claim 1, characterized in that the the adjustment of a desired pressure gradient in the drawing shaft (4) is executed by locally denting and bagging a pliable metal sheet whereof one of the plates (5) is made.

15. A method for the production of a spun-laid nonwoven according to claim 1, characterized in that
i) a material to be spun is pressed out of spinnerets that are arranged in series to obtain an assemblage of filaments (1) resulting in the form of a curtain of yarns,
ii) said assemblage is cured in a cooling zone disposed beneeth said spinnerets, on which occasion blowing at the filaments is eventually executed,
iii) beneeth said cooling zone, said assemblage is subjected to drawing according to claim 1, wherein the pressure gradient in the drawing shaft (4) is adjusted so that the drop of the back pressure within the drawing shaft (4) in the moving direction of the yarn arrives at a linear progression and, perpendicular to the moving direction of the yarn, adapts itself to a constant value, and
iv) in forming a primary textile fabric, the drawn filaments are deposited on a conveyance device (19).

16. A device for the pneumatic drawing of filament bundles (1) assembled in the form of a curtain of yarns, comprising an injector (2) which is developped so as to be rectangular in horizontal cross-section, a drawing shaft (4) in the form of two plates (5) arranged in parallel being adjacent to said injector (2) wherein at least one of said plates (5) comprises several pressure gauge equipments (6) disposed in the form of a grid, and, for adjusting the back pressure in the drawing shaft as a measure for the distribution of the velocity of the drawing gas, further comprising means wherewith the distribution of the velocity of the drawing gas in the drawing shaft (4) can be adjusted, that is to say, by local deformation of at least one of the plates and/or by the local alteration of the amount of drawing gas in the drawing shaft (4).

17. The device of claim 16, characterized in that at least one of the plates (5) of the drawing shaft (4) comprises several contol gas conduits arranged in the form of a grid.

18. The device of claim 16, characterized in that at least one of the plates (5) of the drawing shaft (4) comprises several positioning devices (7) arranged in the form of a grid and wherewith the plate (5) is locally deformable.

19. The device of claim 16, characterized in that, in vertical cross-section, the injector (2) shows a plane-parallel form.

20. The device of claim 16, characterized in that the injector (2) comprises a diffuser connecting the injector (2) with the drawing shaft (4).

21. The device of claim 16, characterized in that said device comprises a drafting inset (8) having a drafting slot (9) that receives said filament bundles (1) and runs into a gas mixer chamber (10) which is equipped with at least one gas feeding tube (11).

22. The device of claim 21, characterized in that the gas supply of the gas mixer chamber (10) is realized via a Laval nozzle downstream to the gas feeding tube (11).

23. The device of claim 16, characterized in that bore holes (13) are provided in the drawing shaft (4), each ending in a closed measuring room (12) wherein the measurement of the pressure is performed by means of pressure gauge equipments.

24. The device of claim 23, characterized in that a selector switch, preferably a pneumatic multiple contact switch (15), is provided wherewith the pressure gauge values of several closed measuring rooms (13) are interrogated sequentially.

25. The device of claim 16, characterized in that the grids of the pressure gauge equipments (6) are disposed in one of the plates (5a) forming the drawing shaft (4) and the grids of the positioning devices (7) are disposed in the other plates (5b) forming the drawing shaft (4), each pressure gauge equipment lying opposite a positioning device at a time.

26. The device of claim 16, characterized in that a control equipment (18) is provided which is driven by a transmitter (19) indicating the measured values of the individual pressure gauge equipments (6) and which compares the measured pressure gauge values of the individual pressure gauge equipments (6) with a predetermined set-point and, when they have surpassed or fallen below a predetermined range, adjusts a regulating device (7) situated near the corresponding pressure gauge equipment (6) and/or feeds or deflates control gas in or from the drawing shaft (4) via a control gas conduit situated near the corresponding pressure gauge equipment (6) so as to restore the pressure gauge value in said range.

27. Use of the device of claim 16 at the drawing process in the manufacture of spun-laid nonwoven.

## Revendications

1. Procédé d'étirage de faisceaux de filaments (1) présents sous la forme d'un rideau de fils, comprenant les étapes suivantes :
a) Introduction des faisceaux de filaments (1) conjointement avec du gaz aspiré dans un injecteur (2), rectangulaire vu en coupe horizontale, et étirage partiel des faisceaux de filaments (1) dans l'injecteur (2).
b) étirage final des faisceaux de filaments (1) dans un puits d'étirage (4) faisant suite à l'injecteur (2) et comprenant deux plaques (5) rapprochées disposées en parallèle,
c) contrôle de l'évolution de la pression dans le puits d'étirage (4) par plusieurs appareils de mesure de pression (6) disposés en réseau, et
d) réglage d'une évolution de pression souhaitée dans le puits d'étirage (4) par une variation locale de la géométrie et/ou de la quantité de gaz d'étirage dans le puits d'étirage (4).

2. Procédé selon la revendication 1, caractérisé en ce que l'injecteur (2) présente une forme à surfaces parallèles vue en coupe verticale.

3. Procédé selon la revendication 1, caractérisé en ce que l'injecteur (2) présente un diffuseur qui relie l'injecteur (2) au puits d'étirage (4).

4. Procédé selon la revendication 1, caractérisé en ce que le réglage d'une évolution de pression souhaitée dans le puits d'étirage (4) s'effectue par une arrivée et une évacuation locales adéquates d'un gaz régulateur, ce gaz régulateur étant introduit dans le puits d'étirage (4) au moyen de conduites de gaz régulateur disposées en réseau sur au moins une des plaques (5) du puits d'étirage (4) et exploitables individuellement ou étant évacué de ce puits.

5. Procédé selon la revendication 1, caractérisé en ce que le réglage d'une courbe de pression souhaitée dans le puits d'étirage (4) s'effectue par une déformation locale d'au moins une des plaques (5) au moyen de dispositifs de réglage (7), qui sont disposés en réseau et sont réglables individuellement.

6. Procédé selon la revendication 1, caractérisé en ce que le faisceau de filament (1) est introduit conjointement avec du gaz aspiré dans un insert d'introduction (8) présentant une fente d'introduction (9) qui reçoit le faisceau de filaments (1), et qui débouche dans une chambre de mélange de gaz (10) alimentée en gaz propulseur par au moins une conduite d'arrivée de gaz (11).

7. Procédé selon la revendication 6, caractérisé en ce que le gaz propulseur est amené à la chambre de mélange de gaz (10) par une buse de Laval.

8. Procédé selon la revendication 1, caractérisé en ce que la pression statique provoquée par la pression de retenue dans le puits d'étirage (4) est mesurée dans un espace de mesure (12) fermé, qui communique avec le puits d'étirage (4) par un alésage (13).

9. Procédé selon la revendication 8, caractérisé en ce que la mesure de pression s'effectue au moyen d'un capteur de pression qui est relié par une conduite en flexible (17) à l'espace de mesure (12) fermé.

10. Procédé selon la revendication 1, caractérisé en ce que les valeurs de mesure de pression de plusieurs appareils de mesure de pression (6) sont scrutées séquentiellement.

11. Procédé selon la revendication 9, caractérisé en ce que plusieurs conduites en flexible (17) sont reliées à un commutateur pneumatique à gradins (15) et en ce que la scrutation des valeurs de mesure de pression de plusieurs appareils de mesure de pression (6) s'effectue séquentiellement par le commutateur pneumatique à gradins (15).

12. Procédé selon la revendication 1, caractérisé en ce que la valeur de pression mesurée, des différents appareils de mesure de pression (6), est comparée avec une valeur de consigne prédéfinie et en ce que, lorsqu'on sort d'un côté ou de l'autre, d'une plage prédéfinie, on effectue un réglage en faisant varier l'espacement local entre les plaques (5) avec un ou plusieurs dispositifs de réglage (7) situés à proximité de l'appareil de mesure (6) concerné de façon que la valeur de mesure de pression soit ramenée dans ladite plage.

13. Procédé selon la revendication 1, caractérisé en ce que la valeur de mesure de pression mesurée, des différents appareils de mesure de pression (6), est comparée avec une valeur de consigne prédéfinie et que, lorsqu'on sort, d'un côté ou de l'autre, d'une plage prédéfinie, on fait un réglage en faisant varier la quantité de gaz d'étirage circulant à travers le puits d'étirage (4) au moyen d'une arrivée ou d'une évacuation d'une partie du gaz d'étirage par une ou plusieurs conduites de gaz régulateur se trouvant sur l'appareil de mesure de pression (6) ou à proximité de celui-ci, de façon que la valeur de mesure de pression soit ramenée dans ladite plage.

14. Procédé selon la revendication 1, caractérisé en ce que le réglage d'une courbe de pression souhaitée dans le puits d'étirage (4) s'effectue par le bossellement ou le débossellement locale d'une tôle cabossable, constituant l'une des plaques (5).

15. Procédé de fabrication de non-tissés du type par filage selon la revendication 1, caractérisé en ce que
I) un matériau étirable est pressé, par des filières de tissage disposées en rangées, en une nappe de filaments (1) en forme de rideau de fil,
II) cette nappe est consolidée dans une zone de refroidissement disposée au-dessous des filières de tissage, un soufflage sur les filaments s'effectuant éventuellement,
III) cette nappe étant soumise au-dessous de la zone de refroidissement à un étirage selon la revendication 1, l'évolution de pression dans le puits d'étirage (4) étant réglée de façon que la chute de la pression de retenue dans le puits d'étirage (4) suive une courbe linéaire vu dans la direction d'avance de marche du fil et prenne une valeur constante perpendiculairement à sa direction d'avance, et
IV) les filaments étirés sont déposés sur un dispositif de transport (19) en formant une structure textile primaire.

16. Dispositif pour l'étirage pneumatique de faisceaux de filaments (1), se présentant sous la forme d'un rideau de fils, comprenant un injecteur (2) rectangulaire vu en coupe horizontale, auquel se raccorde un puits d'étirage (4) sous la forme de deux plaques (5) parallèles, au moins une des plaques (5) présentant plusieurs appareils de mesure de pression (6) disposés en réseau et présentant, pour le réglage de la pression de retenue dans le puits d'étirage, comme moyen pour la répartition de vitesse du gaz d'étirage, des dispositifs qui permettent de régler la répartition de vitesse du gaz d'étirage dans le puits d'étirage (4), et ce par déformation locale d'au moins une plaque et/ou variation locale de la quantité de gaz d'étirage dans le puits d'étirage (4).

17. Dispositif selon la revendication 16, caractérisé en ce qu'au moins une des plaques (5) du puits d'étirage (4) présente plusieurs conduites de gaz régulateur disposées en réseau.

18. Dispositif selon la revendication 16, caractérisé en ce qu'au moins une des plaques (5) du puits d'étirage (4) présente plusieurs dispositifs de réglage (7) disposés en réseau, au moyen desquels la plaque (5) peut être déformée localement.

19. Dispositif selon la revendication 16, caractérisé en ce que l'injecteur (2) présente une forme à surfaces parallèles vue en coupe verticale.

20. Dispositif selon la revendication 16, caractérisé en ce que l'injecteur (2) présente un diffuseur qui relie l'injecteur (2) au puits d'étirage (4).

21. Dispositif selon la revendication 16, caractérisé en ce que celui-ci présente un insert d'introduction (8) comportant une fente d'introduction (9) recevant les faisceaux de filaments (1) et débouchant dans une chambre de mélange de gaz (10) qui est équipée d'au moins une conduite d'arrivée de gaz (11).

22. Dispositif selon la revendication 21, caractérisé en ce que l'alimentation en gaz de la chambre de mélange de gaz (10) s'effectue par une buse de Laval montée en aval la conduite d'arrivée de gaz (11).

23. Dispositif selon la revendication 16, caractérisé en ce que dans le puits d'étirage (4) sont disposés des alésages (13) qui débouchent dans des espaces de mesure (12) fermés, dans lesquels la mesure de pression s'effectue au moyen d'appareils de mesure de pression.

24. Dispositif selon la revendication 23, caractérisé en ce qu'il est prévu un sélecteur, de préférence un commutateur à gradins (15) pneumatique qui permet de scruter séquentiellement les valeurs de pression de plusieurs espaces de mesure fermés (12).

25. Dispositif selon la revendication 16, caractérisé en ce que les réseaux des appareils de mesure de pression (6) se trouvent dans l'une des plaques (5a) formant le puits d'étirage (4) et les réseaux des dispositifs de réglage (7) dans l'autre des plaques (5b) formant le puits d'étirage (4), un appareil de mesure de pression faisant face respectivement à un dispositif de réglage.

26. Dispositif selon la revendication 16, caractérisé en ce qu'il est prévu un appareil de réglage (18), qui est commandé par un convertisseur de valeur de mesure (19), qui affiche les valeurs de mesure des différents appareils de mesure de pression (6) et compare les valeurs mesurées des différents appareils de mesure de pression (6) avec une valeur de consigne prédéfinie et en ce que, lorsqu'on sort d'un côté ou de l'autre d'une plage prédéfinie, un appareil de réglage (7) se trouvant à proximité de l'appareil de mesure de pression (6) concerné fait un réglage et/ou du gaz régulateur entre dans le puits d'étirage (4) ou en sort par une conduite de gaz régulateur se trouvant à proximité de l'appareil de mesure de pression (6) concerné, de sorte que la valeur de mesure de pression est ramenée dans ladite plage.

27. Utilisation du dispositif selon la revendication 16 lors de l'étirage pour la fabrication de non-tissés du type par filage.
